Europäisches Patentamt

European Patent Office

Office européen des brevets

(19)

(11) Veröffentlichungsnummer : **0 235 136**
B1

(12)  **EUROPÄISCHE PATENTSCHRIFT**

(45) Veröffentlichungstag der Patentschrift :
15.06.88

(21) Anmeldenummer : 85905613.7

(22) Anmeldetag : 21.10.85

(86) Internationale Anmeldenummer :
PCT/EP 85/00554

(87) Internationale Veröffentlichungsnummer :
WO/8602608 (09.05.86 Gazette 86/10)

(51) Int. Cl.⁴ : **B 60 T** 1/08, B 60 T 1/10

(54) ANTRIEBSANORDNUNG FÜR NUTZKRAFTFAHRZEUGE.

(30) Priorität : 24.10.84 PCT/EP84/00326

(43) Veröffentlichungstag der Anmeldung :
09.09.87 Patentblatt 87/37

(45) Bekanntmachung des Hinweises auf die Patenterteilung : 15.06.88 Patentblatt 88/24

(84) Benannte Vertragsstaaten :
DE FR IT

(56) Entgegenhaltungen :
DE-A- 1 630 801
DE-A- 1 780 591
FR-A- 1 408 774
FR-A- 1 475 839
FR-A- 2 093 579
FR-A- 2 499 649
GB-A-  262 709
GB-A-  262 709
US-A- 1 621 653
US-A- 1 814 666
US-A- 2 023 533
US-A- 3 297 114
US-A- 4 451 094
US-A- 4 480 728

(73) Patentinhaber : ZAHNRADFABRIK FRIEDRICHSHAFEN AKTIENGESELLSCHAFT
Löwentaler Strasse 100 Postfach 2520
D-7990 Friedrichshafen 1 (DE)

(72) Erfinder : BIEBER, Gerold
Mühlengärten 7
D-7994 Langenargen (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Die Erfindung betrifft eine Antriebsanordnung für Nutzkraftfahrzeuge, mit einem Wechselgetriebe und einer Dauerbremseinrichtung, nach dem Oberbegriff des Anspruches.

Eine derartige Antriebsanordnung ist bekannt aus der US-PS 20 23 533. In dieser Antriebsanordnung ist als Dauerbremseinrichtung eine Zahnradmaschine vorgesehen, die über einen Zahnradsatz angetrieben werden kann. Der Zahnradsatz stellt eine trennbare Verbindung zu der Dauerbremseinrichtung her. Durch eine Verschiebung eines der Zahnräder kann die Verbindung getrennt werden. Die Dauerbremseinrichtung kann außerdem durch ein von Hand verstellbares, federbelastetes Ventil beeinflußt werden. Trotz eines hohen Aufwandes an Betätigungsmitteln ist es nicht möglich, mit einer derartigen Bremse ein Fahrzeug bis zum Stillstand abzubremsen.

Der Erfindung liegt die Aufgabe zugrunde, eine derartige Antriebsanordnung so zu verbessern, daß mit der Dauerbremseinrichtung ein Fahrzeug bis zu seinem Stillstand abgebremst werden kann. Die Steuerung und Betätigung der Dauerbremseinrichtung soll dabei auf einfache Weise erfolgen können.

Diese Aufgabe wird erfindungsgemäß durch die im Anspruch gekennzeichnete Antriebsanordnung gelöst.

Zwar ist aus der US-PS 18 14 666 eine Dauerbremseinrichtung in der Form einer Radialkolbenmaschine bekannt. Die Kolben dieser Maschine sind jedoch durch Verbindungsstangen mit dem Exzenter verbunden, so daß eine einfache Trennung der Bremse nicht möglich ist.

Eine Radialkolbenmaschine bietet neben der Eigenschaft der Dauerbremse die Möglichkeit, ein Fahrzeug bis zu seinem Stillstand abzubremsen. Durch die Möglichkeit der Anordnung einer Einrichtung zum Abheben der Förderkolben von ihrer Hubeinrichtung können die Leerlaufverluste auf einfache Weise reduziert werden. Die Anordnung einer separaten Trennkupplung bzw. eines Schieberades erübrigt sich.

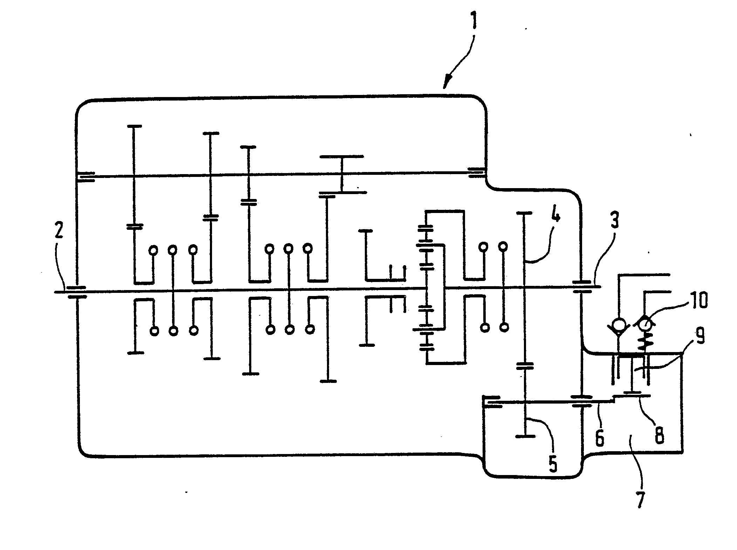

Im folgenden wird die Erfindung anhand eines in der Zeichnung dargestellten Ausführungsbeispieles näher erläutert. Die einzige Figur zeigt einen Querschnitt durch die erfindungsgemäße Antriebsanordnung.

Die Antriebsanordnung enthält ein Wechselgetriebe 1, das sowohl als Handschalt- wie auch als Automatgetriebe ausgeführt sein kann. Das Wechselgetriebe 1 weist eine Antriebswelle 2 und eine Abtriebswelle 3 auf. Nahe dem Austritt der Abtriebswelle 3 aus dem Wechselgetriebe 1 ist auf der Abtriebswelle 3 ein großes Zahnrad 4 angeordnet, das mit einem kleinen Zahnrad 5 kämmt. Durch das kleine Zahnrad 5 wird eine parallel zu der Abtriebswelle 3 des Wechselgetriebes 1 versetzt angeordnete Welle 6 angetrieben, die mit dem Primärteil einer Dauerbremseinrichtung 7 in Verbindung steht. Als Dauerbremseinrichtung 7 wird eine Radialkolbenmaschine verwendet. Das kleine Zahnrad 5 ist über die Welle 6 direkt mit einem Hubelement 8 verbunden, das nur schematisch dargestellt ist und in bekannter Weise, beispielsweise als Exzenter oder als Nockenscheibe, ausgeführt ist. Durch das Hubelement 8 werden in bekannter Weise Förderkolben 9 in radialer Richtung bewegt.

Die Trennung der Dauerbremseinrichtung von dem kleinen Zahnrad 5 erfolgt durch eine Einrichtung zum Abheben der Förderkolben 9 von ihrem Hubelement 8. Eine solche Einrichtung zum Abheben der Förderkolben 9 von dem Hubelement 8 läßt sich derart ausbilden, daß die Förderkolben bei einem normalen Fahrbetrieb durch einen Steuerdruck von dem Hubelement 8 abgehoben sind. Bei einem Bremsbetrieb und fehlendem Steuerdruck werden diese Förderkolben durch Federkraft in Anlage an dem Hubelement gehalten. Ebenso ist es jedoch auch möglich, die Förderkolben nur bei einem Bremsbetrieb von außen mit einem über ein federbelastetes Rückschlagventil 10 zugeführten Steuerdruck zu beaufschlagen und sie dadurch in Anlage an dem Hubelement 8 zu halten. Beim Fehlen dieses Steuerdruckes werden die Förderkolben durch das Hubelement abgehoben und bleiben in ihrer Endlage stehen.

Bei einer derartigen Dauerbremseinrichtung wird die Bremsenergie in Druck in dem Ölstrom umgewandelt und über ein Druckbegrenzungsventil entspannt. Die dabei entstehende Wärme wird über einen Kühler an die Umgebung abgegeben.

Bezugszeichen

    1 Wechselgetriebe
    2 Antriebswelle
    3 Abtriebswelle
    4 großes Zahnrad
    5 kleines Zahnrad
    6 Welle
    7 Dauerbremseinrichtung
    8 Hubelement
    9 Förderkolben
    10 Rückschlagventil

## Patentanspruch

Antriebsanordnung für Nutzkraftfahrzeuge, mit einem Wechselgetriebe (1) und einer mit einer Übersetzung ins Schnelle angetriebenen, an einer zu der Abtriebswelle (3) des Wechselgetriebes (1) versetzt liegenden Welle (6) angeordneten Dauerbremseinrichtung (7), wobei der Antrieb der Dauerbremseinrichtung (7) direkt an der Abtriebswelle (3) des Wechselgetriebes (1) angeordnet ist und zwischen dem Antrieb (4, 5) der Dauerbremseinrichtung (7) und der Dauerbremseinrichtung (7) eine trennbare Verbindung besteht, dadurch gekennzeichnet, daß die Dauerbremseinrichtung (7) eine Radialkolbenmaschine (8, 9) ist und daß die trennbare Verbindung durch eine Einrichtung zum Abheben der Förderkolben (9) von ihrem Hubelement (8) gebildet ist.

**Claim**

Drive arrangement for commercial vehicles with a selector gearbox (1) and a continuous braking device (7) located on a shaft (6) offset to the output shaft (3) of the selector gearbox (1) and driven in an overdrive ratio in which arrangement the continuous braking device (7) is driven directly off the output shaft (3) of the selector gearbox (1) and in which a separable connection is located between the drive (4, 5) of the continuous braking unit (7) and the continuous braking unit (7), characterized in that the continuous braking device (7) is a radial piston unit (8, 9) and in that the separable connection is formed as a device with which the delivery plungers (9) can be raised from its lifting element (8).

**Revendication**

Transmission pour véhicules utilitaires, comportant une boîte de vitesses (1) et un dispositif ralentisseur (7) entraîné à une vitesse accrue par une surmultiplication et disposé sur un arbre (6) décalé par rapport à l'arbre de sortie (3) de la boîte de vitesses (1), l'entraînement du dispositif ralentisseur (7) se faisant directement à partir de l'arbre de sortie (3) de la boîte de vitesses (1) et la liaison entre l'entraînement (4, 5) du dispositif ralentisseur (7) et ce dispositif (7) étant débrayable, caractérisée en ce que le dispositif ralentisseur (7) est une machine à pistons radiaux (8, 9) et en ce que ladite liaison débrayable est constituée par un dispositif pour séparer les pistons (9) d'un élément qui les entraîne en va-et-vient (8).